# EUROPÄISCHE PATENTSCHRIFT

(11) **EP 1 826 680 B1**
(45) Veröffentlichungstag und Bekanntmachung des Hinweises auf die Patenterteilung: **20.08.2008**
(21) Anmeldenummer: 06003742.1
(22) Anmeldetag: 23.02.2006
(51) Int. Cl.: G06F 13/40, G06F 1/26

(54) **Verfahren zum betreiben einer Erweiterungskarte**
Method for operating an expansion card
Procédé destiné au fonctionnement d'une carte d'extension

(43) Veröffentlichungstag der Anmeldung: 29.08.2007
(73) Patentinhaber: SIEMENS AKTIENGESELLSCHAFT, 80333 München (DE)
(72) Erfinder: Sommer, Frank-Ulrich, 69126 Heidelberg (DE)

(56) Entgegenhaltungen:
- EP-A- 0 889 415
- DE-A1- 10 308 295
- US-A1- 2004 210 777
- US-A1- 2005 088 201

## Beschreibung

Die Erfindung betrifft ein Verfahren zum Betreiben einer Erweiterungskarte eines Rechners, welcher mit mindestens einem Steckplatz zur Aufnahme der Erweiterungskarte versehen ist, wobei in einem Speicherbereich der Erweiterungskarte ein erster und ein zweiter Konfigurationsdatensatz hinterlegt ist, von denen der eine einer ersten und der andere einer zweiten Signalisierungsspannung zugeordnet ist, und wobei die einem FPGA-Baustein der Erweiterungskarte übermittelten Konfigurationsdatensätze dem FPGA-Baustein anzeigen, ob eine Schutzschaltung zu aktivieren oder zu deaktivieren ist. Ferner betrifft die Erfindung eine Erweiterungskarte für einen Rechner und darüber hinaus einen Rechner mit einer derartigen Erweiterungskarte.

Ein mit mehreren Steckplätzen versehener Rechner, welche zur Aufnahme von Erweiterungskarten vorgesehen sind, ist beispielsweise aus der Internetseite http://de.wikipedia.org/wiki/Steckplatz bekannt. Diese Steckplätze sind z. B. über einen so genannten in der "PCI Local Bus Specification" beschriebenen PCI-Bus miteinander verbunden, an welchen ferner hochintegrierte Controller, Peripherieerweiterungskarten und/oder Prozessor- und/oder Speichersysteme angeschlossen sind. Die Busteilnehmer können entweder auf einer Hauptplatine fest miteinander verdrahtet sein oder die Busteilnehmer sind in Form von Erweiterungskarten in die Steckplätze steckbar, wobei in Rechnern gewöhnlich eine Kombination von fest integrierten Busteilnehmern und Busteilnehmern in Form von Erweiterungskarten verwirklicht ist.

Zum Zeitpunkt der Einführung der PCI-Bus-Technologie wurde in elektronischen Geräten überwiegend eine Signalisierungsspannung von 5 V eingesetzt, welche daher auch in mit einem PCI-Bus versehenen Rechnern verwirklicht wurde. Im Zuge der fortschreitenden Miniaturisierung (kleinere Halbleiter-Strukturen, niedrigere Spannungsfestigkeit) wurde die Einführung von 3,3 V als alternative Signalisierungsspannung erforderlich. Die Signalisierungsspannung wird durch den Rechner bzw. durch ein Grundsystem vorgegeben, wobei entweder 3,3 V oder 5 V als Signalisierungsspannung eingesetzt werden. Gewöhnliche Erweiterungskarten funktionieren allerdings nur mit 3,3 V, nur mit 5 V oder sie funktionieren sowohl mit 3,3 V als auch mit 5 V.

Um zu verhindern, dass eine für einen Einsatz in einem "3,3 V-Steckplatz" geeignete Erweiterungskarte versehentlich - in einen "5 V-Steckplatz" gesteckt werden kann, ist der Steckplatz mechanisch kodiert. Dieser weist dazu einen Trennsteg auf, dessen Position von der verwendeten Signalisierungsspannung bestimmt wird. Die Erweiterungskarte muss, um gesteckt werden zu können, an dieser Stelle innerhalb eines Direktsteckers eine Aussparung besitzen. PCI-Erweiterungskarten, die nur eine 3,3 V-Signalisierungsspannung unterstützen, sind aufgrund der Verbreitung von Systemen mit einer 5 V-Signalisierungsspannung nur selten oder in Spezialfällen anzutreffen. Weit verbreitet sind PCI-Erweiterungskarten, welche sowohl eine 3,3 V- als auch eine 5 V-Signalisierungsspannung unterstützen, wobei diese Erweiterungskarten innerhalb des Steckers mit zwei entsprechenden Aussparungen versehen sind.

Um PCI-Erweiterungskarten, welche sowohl eine 3,3 V- als auch eine 5 V-Signalisierungsspannung unterstützen, robuster gegenüber Über- bzw. Unterspannungen auf den Signalleitungen auszugestalten, sind Schutzdioden in einem PCI-Controllerbaustein integriert und zur Ableitung dieser Über- bzw. Unterspannungen in einen I/O-Buffer eines ICs von Erweiterungskarten vorgeschrieben. Dazu ist gewöhnlich vorgesehen, eine Schutzdiode mit Massepotential zu verbinden, eine Schutzdiode für den Fall einer 3,3 V-Signalisierungsspannung zum Schutz von empfindlichen Bausteinen an 3,3 V-Potential anzuschließen, für den Fall einer 5 V-Signalisierungsspannung optional an +5 V-Potential keinesfalls an 3,3 V-Potential anzuschließen.

Häufig wird zur Verwirklichung eines PCI-Controllers auf einer Erweiterungskarte ein so genannter FPGA (Feldprogrammierbare Gate-Arrays)-Baustein verwendet, wobei durch die weitergehende Miniaturisierung der Strukturen auf dem Baustein die Auswahl an Bausteinen mit einerseits ausreichender Komplexität und andererseits ausreichender Spannungsfestigkeit an den Ein- und/oder Ausgabe-Pins (I/O-Pins) stark eingeschränkt ist. Aktuell erhältliche FPGAs lassen oft höchstens 3,3 V als I/O-Spannung zu, sind jedoch meist entweder gar nicht 5 V-tolerant oder zumindest nicht für 5 V PCI geeignet, da die Anforderungen der PCI-Spezifikation über die reine 5 V-Toleranz hinausgehen, wodurch die Auswahl an geeigneten FPGAs stark eingeschränkt wird.

I/O-Zellen von am Markt erhältlichen, den Erfordernissen der PCI-Spezifikation genügenden FPGA-Bausteinen einer Erweiterungskarte können mit 3,3 V betrieben werden, sind "5 V-tolerant" und entsprechen auch der PCI-Spezifikation im Hinblick auf eine Signalisierungsspannung von 5 V. Um auch bei 3,3 V-Signalisierungsspannung den Erfordernissen der PCI-Spezifikation zu genügen, sind in diesem FPGA-Baustein zuschaltbare Schutzdioden nach 3,3 V sowie dauerhaft nach Masse geschaltete Schutzdioden vorgesehen.

Nach Einschalten einer Versorgungsspannung eines Rechners bzw. eines Grundsystems wird der mit einem flüchtigen Speicher ausgestattete FPGA-Baustein der Erweiterungskarte aus einem gewöhnlich externen nichtflüchtigen Speicher mit internen Verschaltungsinformationen geladen. Diese Informationen beinhalten auch die Information, ob die Schutzdioden an den PCI-I/O-Pins zu- oder abzuschalten sind. Je nach erkannter Signalisierungsspannung wird daher beim Einschalten des Rechners bzw. des Grundsystems einer von zwei verschiedenen Datensätzen verwendet, welche jeweils einer Signalisierungsspannung zugeordnet sind. Eine Änderung der Einstellung der Schutzdioden ist nur durch ein vollständiges Neuladen des FPGA-Bausteins und damit nicht im Betrieb möglich. Während dieses Neuladens ist der FPGA-Baustein inaktiv und alle internen Informationen gehen verloren.

Dies stellt insbesondere dann ein Problem dar, wenn der FPGA-Baustein über den PCI-Controller hinaus zur Kosten- und Flächenbedarfsreduktion weitere zentrale Funktionseinheiten der Erweiterungskarte enthält und die Erweiterungskarte auch mit einer externen Spannung versorgt werden kann. Ein derartiger Einsatz mit einer externen Spannungsversorgung ist für industrielle Anwendungen in der Prozessautomatisierung üblich. Über diese externe Spannungsversorgung ist ein Betrieb der weiteren Funktionseinheiten auch während eines inaktiven PCI-Busses, das bedeutet während der Rechner bzw. das Grundsystem ausgeschaltet ist, möglich. Dadurch kann diese Erweiterungskarte autark ohne den Rechner zur Verwirklichung von Steuerungsaufgaben eingesetzt werden.

Die Deutsche Offenlegungsschrift DE 103 08 295 offenbart eine konfigurierbare PCI-Erweiterungskarte mit einem FPGA.

Der vorliegenden Erfindung liegt die Aufgabe zugrunde, ein Verfahren zum Betrieb einer Erweiterungskarte eines Rechners zu verbessern. Darüber hinaus sind eine Erweiterungskarte sowie ein Rechner zu schaffen, welche für einen derartigen Betrieb geeignet sind.

Diese Aufgabe wird im Hinblick auf das Verfahren durch die im kennzeichnenden Teil des Anspruchs 1, im Hinblick auf die Erweiterungskarte durch die im Anspruch 3 und im Hinblick auf den Rechner durch die im Anspruch 5 angegebenen Maßnahmen gelöst.

Vorteilhaft wird ermöglicht, Funktionseinheiten einer sowohl für eine 3,3 V- als auch für eine 5 V-Signalisierungsspannung geeigneten PCI-Erweiterungskarte gemeinsam mit dem PCI-Controller in einen FPGA zu integrieren, wobei unabhängig von einer Signalisierungsspannung eines Rechners bzw. eines Grundsystems die Erweiterungskarte mit einer externen Spannung versorgt wird bzw. versorgt werden kann. Die benötigte Leiterplattenfläche wird reduziert und die Herstellkosten vermindert. Durch die Unterstützung von sowohl 3,3 V- als auch 5 V-Signalisierungsspannung erhöht sich die Zahl der verwendbaren Grundsysteme.
Durch die automatische Speicherung der zu verwendenden Signalisierungsspannung entfällt außerdem jeder Benutzereingriff, so dass die Installation einer Erweiterungskarte insgesamt sehr einfach durchzuführen ist.
Die Kosten für den nichtflüchtigen Speicher sind gering und die erforderliche Ablaufsteuerung kann beispielsweise in eine erforderliche Steuerung zum Laden des FPGA-Bausteins integriert werden oder gemeinsam mit anderen Funktionseinheiten in einem ohnehin erforderlichen PLD-, einem weiteren FPGA-, ASIC- oder Microcontroller-Baustein verwirklicht werden.

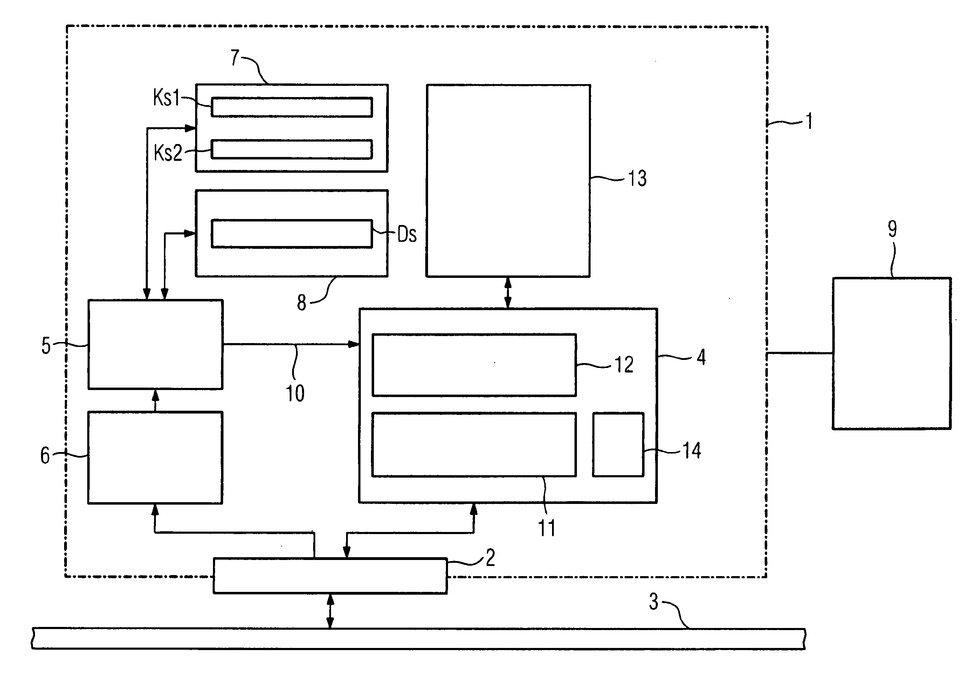

Die Erfindung wird nachfolgend anhand eines Ausführungsbeispiels unter Bezugnahme auf die einzige Figur der Zeichnung näher erläutert. Die Figur der Zeichnung zeigt Bestandteile einer PCI-Erweiterungskarte.

Bestandteile einer PCI-Erweiterungskarte 1, welche über eine geeignete Steckverbindung 2 mit einem PCI-Bus 3 eines Rechners verbunden ist, sind ein FPGA-Baustein 4, eine Steuerung 5, Spannungserfassungsmittel 6 sowie ein Konfigurationsdaten- und ein Einstellspeicher 7, 8. Der Rechner weist gewöhnlich mehrere Steckverbindungen bzw. mehrere Steckplätze auf, welche über den PCI-Bus 3 miteinander verbunden sind und welche zur Aufnahme weiterer Erweiterungskarten vorgesehen sind. In dem Konfigurationsdatenspeicher 7 ist ein erster und ein zweiter Konfigurationsdatensatz Ks1, Ks2 hinterlegt, von denen im vorliegenden Beispiel der Konfigurationsdatensatz Ks1 einer 3,3 V-Signalisierungsspannung und der Konfigurationsdatensatz Ks2 einer 5 V-Signalisierungsspannung zugeordnet ist. Diese Konfigurationsdatensätze Ks1, Ks2 zeigen dem FPGA-Baustein 4 an, ob eine hier nicht dargestellte, Schutzdioden umfassende Schutzschaltung 14 des FPGA-Bausteins 4 zu aktivieren oder zu deaktivieren ist. In dem Einstellspeicher 8 ist ein Datensatz Ds hinterlegt, welcher der zu verwendenden Signalisierungsspannung entspricht und welcher für den Fall ausgelesen und zur Auswahl des entsprechenden ersten oder zweiten Konfigurationsdatensatzes Ks1, Ks2 genutzt wird, falls der Rechner ausgeschaltet ist und die PCI-Erweiterungskarte 1 durch eine externe Spannungsquelle versorgt wird.

Der Konfigurationsdatenspeicher 7 kann z. B. in Form eines Flash-EPROM, EEPROM oder als batteriegepuffertes RAM realisiert werden. Für den Einstellspeicher 8 bestehen dieselben Möglichkeiten sowie zusätzlich z. B. die Möglichkeit der Realisierung in Form eines batteriegepufferten Flip-Flops. Selbstverständlich können die Konfigurationsdatensätze Ks1, Ks2 und der Datensatz Ds auch in unterschiedlichen Bereichen desselben nichtflüchtigen Speichers hinterlegt sein.

Es wird angenommen, dass der Rechner ausgeschaltet ist und die Erweiterungskarte durch ein externes Netzteil 9 mit der erforderlichen Spannung, z. B. mit einer Spannung von 12 V, versorgt wird. Die Steuerung 5 liest den in dem Einstellspeicher 8 z. B. im Rahmen einer Werkseinstellung hinterlegten Datensatz Ds aus und übermittelt dem FPGA-Baustein 4 den entsprechenden Konfigurationsdatensatz Ks1 oder Ks2 über eine Konfigurationsverbindung 10. Es wird angenommen, dass der Datensatz Ds dem zweiten Konfigurationsdatensatz Ks2 entspricht, wodurch einem PCI-Controller 11 des FPGA-Bausteins 4 eine 5 V-Signalisierungsspannung angezeigt wird und dieser die Schutzschaltung 14 deaktiviert. Dadurch wird der Betrieb der Erweiterungskarte 1, welche im FPGA-Baustein 4 integrierte Funktionseinheiten 12 und/oder weitere mit dem FPGA-Baustein 4 verbundene Funktionseinheiten 13 aufweist, ohne Kenntnis der Signalisierungsspannung des Rechners ermöglicht.

Es wird nun angenommen, dass während des Betriebs der Erweiterungskarte 1 der Rechner eingeschaltet wird. Dies bedeutet, dass die von dem Rechner vorgegebene Signalisierungsspannung für die Kommunikation der Funktionseinheiten des Rechners über den PCI-Bus 3 maßgebend ist, um einen fehlerfreien Datenaustausch zu gewährleisten. Die Spannungserfassungsmittel 6 erfassen die Signalisierungsspannung an einem entsprechenden Pin der Steckverbindung 2 und übermitteln diese der Steuerung 5, welche die erfasste Signalisierungsspannung mit der dem Datensatz Ds entsprechenden Spannung vergleicht. Liegt keine Übereinstimmung vor, z. B. weil die erfasste Signalisierungsspannung des Rechners 3,3 V ist und - wie angenommen - der Datensatz Ds eine 5 V-Signalisierungsspannung vorgibt, liest die Steuerung 5 aus dem Konfigurationsspeicher 7 den dieser Signalisierungsspannung entsprechenden Konfigurationsdatensatz Ks1 aus und übermittelt diesen dem FPGA-Baustein 4, aufgrund dessen der FPGA-Baustein 4 die Schutzschaltung 14 aktiviert. Außerdem wird im Datensatz Ds im Einstellspeicher 8 die erfasste Signalisierungsspannung hinterlegt und damit der vorherige Inhalt überschrieben.
Eine Abweichung der erfassten Signalisierungsspannung von der durch den Datensatz Ds voreingestellten Signalisierungsspannung bewirkt einmalig kurzzeitig eine Funktionsunterbrechung der Erweiterungskarte 1. Anschließend entspricht der Inhalt des Datensatzes Ds im Einstellspeicher 8 der Signalisierungsspannung des verwendeten Rechners.

Für den Fall, dass keine Abweichung erkannt wird, bewirkt das Einschalten des Rechners keine Funktionsunterbrechung der Erweiterungskarte 1. Dies ist z. B. dann der Fall, falls der Datensatz Ds einer 3,3 V-Signalisierungsspannung entspricht und die erfasste Signalisierungsspannung des eingeschalteten Rechners ebenfalls 3,3 V beträgt. In diesem Fall ist die Schutzschaltung 14 des FPGA-Bausteins 4 bereits aktiviert, da dem FPGA 4 schon zuvor der Konfigurationsdatensatz Ks1 übermittelt wurde.

Für den Fall, dass der Datensatz Ds einer 3,3 V-Signalisierungsspannung entspricht, die erfasste Signalisierungsspannung des eingeschalteten Rechners 5 V beträgt, liest die Steuerung 5 den dieser erfassten Signalisierungsspannung entsprechenden Konfigurationsdatensatz Ks2 aus und übermittelt diesen dem FPGA-Baustein 4. Daraufhin deaktiviert der FPGA-Baustein 4 die Schutzschaltung 14. Außerdem wird auch in diesem Fall im Datensatz Ds im Einstellspeicher 8 die erfasste Signalisierungsspannung hinterlegt. Auch hier kommt es zu einer einmaligen kurzzeitigen Funktionsunterbrechung.

Die Schutzschaltung 14 bleibt deaktiviert, falls der Datensatz Ds einer 5 V-Signalisierungsspannung entspricht und diese gleich der erfassten Signalisierungsspannung des eingeschalteten Rechners 5 V ist.

## Patentansprüche

1. Verfahren zum Betreiben einer Erweiterungskarte (1) eines Rechners, welcher mit mindestens einem Steckplatz (2) zur Aufnahme der Erweiterungskarte (1) versehen ist, wobei in einem Speicherbereich der Erweiterungskarte (1) ein erster und ein zweiter Konfigurationsdatensatz (Ks1, Ks2) hinterlegt ist, von denen der eine einer ersten und der andere einer zweiten Signalisierungsspannung zugeordnet ist, und wobei die einem FPGA-Baustein (4) der Erweiterungskarte (1) übermittelten Konfigurationsdatensätze (Ks1, Ks2) dem FPGA-Baustein (4) anzeigen, ob eine Schutzschaltung (14) zu aktivieren oder zu deaktivieren ist,
**gekennzeichnet durch** folgenden Verfahrensschritt:
für den Fall, dass der Rechner ausgeschaltet und die Erweiterungskarte (1) an eine externe Spannungsversorgung (9) angeschlossen wird, wird ein in der Erweiterungskarte (1) hinterlegter Datensatz (Ds), welcher der zu verwendenden Signalisierungsspannung entspricht, ausgelesen und der entsprechende Konfigurationsdatensatz (Ks1 oder Ks2) dem FPGA-Baustein (4) übermittelt.

2. Verfahren nach Anspruch 1, **dadurch gekennzeichnet, dass**
- nach dem Einschalten des Rechners die Signalisierungsspannung des Steckplatzes (2) erfasst wird, in welchem die Erweiterungskarte (1) steckt,
- der Datensatz (Ds) mit der erfassten Signalisierungsspannung abgeglichen wird und im Falle einer Abweichung der der erfassten Signalisierungsspannung entsprechende Konfigurationsdatensatz (Ks1, Ks2) dem FPGA-Baustein (4) übermittelt wird.

3. Erweiterungskarte für einen Rechner, welcher mit mindestens einem Steckplatz (2) zur Aufnahme der Erweiterungskarte (1) versehen ist, wobei
- in einem Speicherbereich der Erweiterungskarte (1) ein erster und ein zweiter Konfigurationsdatensatz (Ks1, Ks2) hinterlegt ist, von denen der eine einer ersten und der andere einer zweiten Signalisierungsspannung zugeordnet ist,
- die einem FPGA-Baustein (4) der Erweiterungskarte (1) übermittelten Konfigurationsdatensätze (Ks1, Ks2) dem FPGA-Baustein (4) anzeigen, ob eine Schutzschaltung (14) zu aktivieren oder zu deaktivieren ist,
**dadurch gekennzeichnet, dass** für den Fall, dass der Rechner ausgeschaltet ist und die Erweiterungskarte (1) an eine externe Spannungsversorgung (9) angeschlossen ist, eine Steuerung (5) einen in einem weiteren Speicherbereich der Erweiterungskarte (1) hinterlegten Datensatz (Ds), welcher dem ersten oder dem zweiten Konfigurationsdatensatz (Ks1, Ks2) entspricht, ausliest und dem FPGA-Baustein (4) den entsprechenden Konfigurationsdatensatz (Ks1 oder Ks2) übermittelt.

4. Erweiterungskarte nach Anspruch 3, **dadurch gekennzeichnet, dass**
- die Erweiterungskarte (1) mit Mitteln (6) versehen ist, welche für den Fall, dass der Rechner eingeschaltet wird, die Signalisierungsspannung des Steckplatzes (2) erfassen, in welchem die Erweiterungskarte (1) steckt,
- die Steuerung (5) den Datensatz (Ds) mit der erfassten Signalisierungsspannung abgleicht und im Falle einer Abweichung den Konfigurationsdatensatz (Ks1, Ks2), welcher der erfassten Signalisierungsspannung des Rechners entspricht, dem FPGA-Baustein (4) übermittelt.

5. Erweiterungskarte nach Anspruch 3 oder 4, **dadurch gekennzeichnet, dass** die Konfigurationsdatensätze (Ks1, Ks2) in einem ersten und der Datensatz (Ds) in einem zweiten nichtflüchtigen Speicherbereich (7, 8) der Erweiterungskarte (1) hinterlegt sind.

6. Rechner mit einer Erweiterungskarte nach einem der Ansprüche 3 bis 5.

## Claims

1. A method for operating an expansion card (1) of a computer provided with at least one slot (2) for accommodating the expansion card (1), wherein there is stored in a memory area of said expansion card (1) a first and a second configuration data record (Ks1, Ks2), one of which is assigned to a first and the other to a second signaling voltage, and wherein the configuration data records (Ks1, Ks2) transmitted to a FPGA chip (4) of the expansion card (1) indicate to the FPGA chip (4) whether a protection circuit (14) is to be activated or deactivated,
**characterized by** the following step:
for the case that the computer is switched off and the expansion card (1) is connected to an external voltage supply (9), a data record (Ds) stored in the expansion card (1) and corresponding to the signaling voltage to be used is read out and the corresponding configuration data record (Ks1 or Ks2) is transmitted to the FPGA chip (4).

2. The method as claimed in claim 1, **characterized in that**
- when the computer is switched on, the signaling voltage of the slot (2) in which the expansion card (1) is inserted is detected,
- the data record (Ds) is compared with the detected signaling voltage and, in the event of a discrepancy, the configuration data record (Ks1, Ks2) corresponding to the detected signaling voltage is transmitted to the FPGA chip (4).

3. An expansion card for a computer provided with at least one slot (2) for accommodating the expansion card (1), wherein
- there is stored in a memory area of said expansion card (1) a first and a second configuration data record (Ks1, Ks2), one of which is assigned to a first and the other to a second signaling voltage,
- the configuration data records (Ks1, Ks2) transmitted to a FPGA chip (4) of the expansion card (1) indicate to the FPGA chip (4) whether a protection circuit (14) is to be activated or deactivated,
**characterized in that**, for the case that the computer is switched off and the expansion card (1) is connected to an external voltage supply (9), a control unit (5) reads out a data record (Ds) stored in another memory area of the expansion card (1) and corresponding to the first or second configuration data record (Ks1 or Ks2), and transmits the corresponding configuration data record (Ks1 or Ks2) to the FPGA chip (4).

4. The expansion card as claimed in claim 3, **characterized in that**
- the expansion card (1) is provided with means (6) which, for the case that the computer is switched on, detect the signaling voltage of the slot (2) in which the expansion card (1) is inserted,
- the control unit (5) compares the data record (Ds) with the detected signaling voltage and, in the event of a discrepancy, transmits the configuration data record (Ks1, Ks2) corresponding to the detected signaling voltage of the computer to the FPGA chip (4).

5. The expansion card as claimed in claim 3 or 4, **characterized in that** the configuration data records (Ks1, Ks2) are stored in a first and the data record (Ds) in a second nonvolatile memory area (7, 8) of the expansion card (1).

6. A computer with an expansion card as claimed in one of claims 3 to 5.

## Revendications

1. Procédé d'exploitation d'une carte d'extension (1) d'un ordinateur qui est muni d'au moins un logement d'enfichage (2) pour la réception de la carte d'extension (1), un premier et un deuxième ensemble de données de configuration (Ks1, Ks2) étant enregistrés dans une zone de mémoire de la carte d'extension (1), une première tension de signalisation étant associée à l'un et une deuxième à l'autre, et les ensembles de données de configuration (Ks1, Ks2) transmis à un composant FPGA (4) de la carte d'extension (1) indiquant au composant FPGA (4) si une protection de circuit (14) est à activer ou à désactiver,
**caractérisé par** l'étape de procédé suivante :
si l'ordinateur est coupé et si la carte d'extension (1) est raccordée à une alimentation en tension externe (9), on lit un ensemble de données (Ds) enregistré dans la carte d'extension (1) et correspondant à la tension de signalisation à utiliser et on transmet l'ensemble de données de configuration correspondant (Ks1 ou Ks2) au composant FPGA (4).

2. Procédé selon la revendication 1, **caractérisé par le fait que**
- après la mise en marche de l'ordinateur, on détecte la tension de signalisation du logement (2) dans lequel la carte d'extension (1) est enfichée,
- on compare l'ensemble de données (Ds) à la tension de signalisation détectée et, en cas de différence, on transmet au composant FPGA (4) l'ensemble de données de configuration (Ks1, Ks2) correspondant à la tension de signalisation détectée.

3. Carte d'extension pour un ordinateur qui est muni d'au moins un logement d'enfichage (2) pour la réception de la carte d'extension (1),
- un premier et un deuxième ensemble de données de configuration (Ks1, Ks2) étant enregistrés dans une zone de mémoire de la carte d'extension (1), une première tension de signalisation étant associée à l'un et une deuxième à l'autre,
- et les ensembles de données de configuration (Ks1, Ks2) transmis à un composant FPGA (4) de la carte d'extension (1) indiquant au composant FPGA (4) si une protection de circuit (14) est à activer ou à désactiver,
**caractérisée par le fait que** si l'ordinateur est coupé et si la carte d'extension (1) est raccordée à une alimentation en tension externe (9), une commande (5) lit un ensemble de données (Ds) enregistré dans une autre zone de mémoire de la carte d'extension (1) et correspondant au premier ou au deuxième ensemble de données de configuration (Ks1, Ks2) et transmet l'ensemble de données de configuration correspondant (Ks1 ou Ks2) au composant FPGA (4).

4. Carte d'extension selon la revendication 3, **caractérisée par le fait que**
- la carte d'extension (1) est munie de moyens (6) qui, si l'ordinateur est mis en marche, détectent la tension de signalisation du logement (2) dans lequel la carte d'extension (1) est enfichée,
- et la commande (5) compare l'ensemble de données (Ds) à la tension de signalisation détectée et, en cas de différence, transmet au composant FPGA (4) l'ensemble de données de configuration (Ks1, Ks2) qui correspond à la tension de signalisation détectée de l'ordinateur.

5. Carte d'extension selon la revendication 3 ou 4, **caractérisée par le fait que** les ensembles de données de configuration (Ks1, Ks2) sont enregistrés dans une première zone de mémoire non volatile (7) de la carte d'extension (1) et que l'ensemble de données (Ds) est enregistré dans une deuxième zone de mémoire non volatile (8) de ladite carte d'extension.

6. Ordinateur comportant une carte d'extension selon l'une des revendications 3 à 5.
